# EUROPEAN PATENT APPLICATION

(11) **EP 2 441 980 A1**
(43) Date of publication of application: **18.04.2012**
(21) Application number: 11184057.5
(22) Date of filing: 06.10.2011
(51) Int. Cl.: F16H 37/04, F16H 3/097, F16H 3/091

(54) **Gearbox and motor vechicle with such gearbox**

(30) Priority: 13.10.2010 SE 1051071
(71) Applicant: Scania CV AB, 151 87 Södertälje (SE)
(72) Inventor: Hagberg, Magnus, 151 39 Södertälje (SE)

(57) **Abstract**

The invention relates to a gearbox (101) for a motor vehicle comprising a housing, a input shaft (103) journalled in the housing and provided with one gearwheel (120), a mainshaft (105) journalled in the housing and provided with at least one gearwheel (106, 107, 108, 109, 110), and a countershaft (116) journalled in the housing and provided with at least one gearwheel (121) in engagement with said gearwheel (120) on the input shaft (103), which at least one gearwheel (106, 107, 108, 109, 110) on the mainshaft (105) is in engagement with gearwheels (111, 112, 113, 114, 115) on said countershaft (116), which gearbox (101) further comprises a split gear step (104) between the input shaft (103) and the mainshaft (105).

According to the invention at least one further split gear step (122, 123, 124, 145, 126) is provided on the mainshaft (105) and/or the countershaft (116).

The invention relates also to a motor vehicle comprising a gearbox (101) according to any one of the foregoing claims.

## Description

### Technical field

The present invention relates to a gearbox according to the preamble of claim 1 and a motor vehicle provided with such a gearbox according to claim 5.

### Background to the invention

Gearboxes for motor vehicles such as trucks, buses and commercial vehicles comprise a gearbox housing with an input shaft, a mainshaft and a countershaft. The mainshaft and the input shaft are rotatable relative to one another and the countershaft is arranged parallel to the mainshaft. The input shaft is connected to the engine and journalled for rotation in the housing. The mainshaft and the countershaft are also journalled for rotation in the housing. A number of basic gearwheels are provided on the mainshaft and the countershaft and are arranged to engage with one another in pairs. The gearwheels on the mainshaft are adapted to being lockable relative to their shaft. The gear ratio between the mainshaft and the countershaft depends on which gearwheel is locked relative to the mainshaft. To be able to increase the number of gears in them, gearboxes of heavy vehicles are usually provided with some form of additional gear, usually a split gear and/or a range gear. A split gear comprises two consecutive gearwheel pairs with a clutch sleeve between them. The two gearwheel pairs take the form of a first pair of gearwheels in mutual engagement, one of them on the input shaft and the other on the countershaft, and a second pair of gearwheels in mutual engagement, one of them on the mainshaft and the other on the countershaft. The clutch sleeve is so arranged that in low split position it locks the gearwheel which is on the input shaft to the input shaft, with the result that the power from the engine is conveyed via the input shaft down onto the first gearwheel pair of the split gear and thence along the countershaft. The clutch sleeve is also so arranged that in high split position it locks the gearwheel of the second gearwheel pair of the split gear which is on the mainshaft. Power is thus conveyed from the engine via the input shaft across to the mainshaft and down via the second gearwheel pair of the split gear down along the countershaft. In both low split position and high split position, when the vehicle is running, power is conveyed from the countershaft up onto the mainshaft again and out to the vehicle's powered wheels. Where on the mainshaft the power comes up depends on which gearwheel is locked to the mainshaft, i.e. which gear is engaged. The split gear provides twice as many gear steps as the number of gear positions available with only the basic gearwheels on the mainshaft. To further increase the number of gear positions, a high-low gear element, e.g. a range gearbox, may be connected to the output side of the gearbox mainshaft. This results, as in the case of the split gear, in twice as many gear positions are as available with only the basic gearwheels on the mainshaft.

The increasingly stringent requirements for reduction of emissions from motor vehicles mean that future vehicles will need engines which can run optimally within a narrow economic engine speed range. The engines may thus release less exhaust gases. For an engine to be able to run at an optimum speed within a narrow economic speed range, the gearbox needs to have many gears with small steps between them. Today's engines are not regarded as a possible alternative for meeting future optimum running requirements. It is therefore desirable that future engines have many gears with small steps between them without any increase in the number of gear pairs in the gearbox. It is also desirable to achieve gearboxes which are more efficient, with smaller losses.

### Object of the invention

The object of the present invention is thus to propose a gearbox which results in an engine speed which can be kept within a narrow speed range. A further object is to propose a more efficient gearbox with smaller losses.

### Summary of the invention

The above and other objects indicated by the description set out below are achieved by the present invention as defined in the independent claims 1 and 5. Suitable embodiments of the invention are indicated in the dependent claims 2-4 and 6.

As defined according to the present invention, a gearbox for a motor vehicle comprises a housing, an input shaft journalled in the housing and provided with one gearwheel, a mainshaft journalled in the housing and provided with at least one gearwheel, and a countershaft journalled in the housing and provided with gearwheels, at least one of them in engagement with said gearwheel on the input shaft, such that at least one gearwheel of the mainshaft is in engagement with gearwheels on said countershaft, which gearbox further comprises a split step with input shaft and mainshaft, characterised in that at least one further split step is provided on the mainshaft and/or the countershaft.

The invention affords the advantage that the gearbox has a large number of gear positions with no change in gearbox layout and hence no change in the number of gearwheel pairs in the gearbox compared with previous known gearboxes. A larger number of gear positions make it possible for the engine to be kept within a narrow speed range. A further advantage of the present invention is that it results in smaller losses when, for example, power take-offs and retarders are engaged in that a split gear step on the mainshaft can "disconnect" the portion of the mainshaft which is not used up to the range gearbox.

According to an advantageous embodiment, said further at least one split step may be anywhere on the mainshaft. Said further at least one split step may of course also be anywhere on the countershaft or alternatively at least one split step may be on the mainshaft and at least one on the countershaft. The number of gears in the gearbox increases with the number of split steps in it.

The motor vehicle is preferably a truck but the gearbox may of course be in any desired type of vehicle, e.g. a bus or an all-terrain vehicle.

### Brief description of the drawings

The invention is described below in more detail on the basis of non-limitative embodiment examples with reference to the attached drawings, in which:
Figure 1 is a schematic view of a gearbox according to prior art, and
Figure 2 is a schematic view of an embodiment of a gearbox according to the present invention.

### Detailed description of the invention

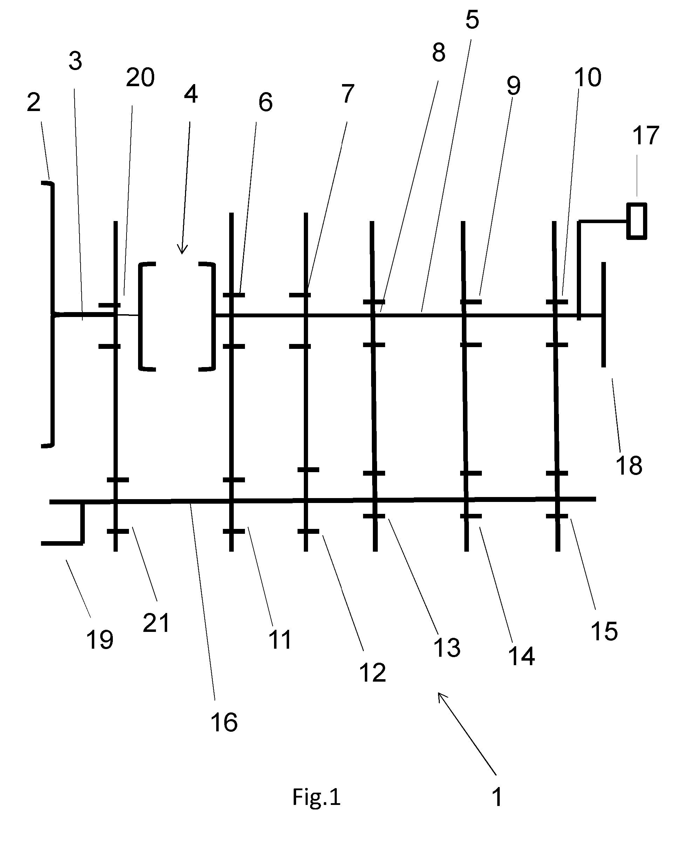

Figure 1 depicts a gearbox 1 according to prior art. An input shaft 3 and a split gear 4 are provided in the forward portion of the gearbox, i.e. nearest to the engine 2. The gearbox 1 also comprises a mainshaft 5 on which a number of so-called basic gears or basic gearwheels 6, 7, 8, 9, 10 are situated. The gearbox 1 further comprises a countershaft 16 arranged parallel with the mainshaft 5. In Figure 1 these basic gearwheels comprise five main gearwheels 6, 7, 8, 9, 10 on the mainshaft 5 and five gearwheels 11, 12, 13, 14, 15 on the countershaft 16 which are in engagement with said main gearwheels on the mainshaft. As seen from the input shaft 3, a reverse gearwheel 10 is situated furthest back in the gearbox 1 and the other four main gearwheels 6, 7, 8, 9 are intended to drive the vehicle forwards.

The purpose of the split gear 4 is to distribute the power from the engine 2 either to the countershaft 16 via a first gearwheel pair 20, 21, the gearwheel 20 being situated on the input shaft 3 and the other gearwheel 21 on the countershaft 16, or to the mainshaft 5 via a second gearwheel pair 6, 11, the gearwheel 6 being situated on the mainshaft 5 and the other gearwheel 11 on the countershaft 16. The split gear 4 is in low split position when connected to the countershaft 16 and in high split position when connected to the mainshaft 5. In Figure 1 the gearbox 1 is engaged in low split position. In low split position the power from the engine 2 is conveyed to the input shaft 3, down to the countershaft 16, up onto the mainshaft 5 and out to powered wheels (not depicted). The power path, i.e. which gearwheels serve to convey the power through the gearbox 1, is decided by which of the gearwheels 6, 7, 8, 9, 10 on the mainshaft 5 is engaged. In high split position the power from the engine 2 is conveyed to the input shaft 3, across to the mainshaft 5 and thence either, depending on which gear is to be engaged, from any of basic gearwheels 6, 7, 8, 9, 10 down onto the countershaft 16 and thence back to the mainshaft 5 and out to the powered wheels, or straight through the mainshaft 5 and out to the powered wheels. As in low split position, the power path is decided by which of the gearwheels 6, 7, 8, 9, 10 on the mainshaft 5 is engaged, i.e. which gear is engaged. The five main gearwheels 6, 7, 8, 9, 10 on the mainshaft 5, comprising four gearwheels 6, 7, 8, 9 for driving the vehicle forwards and one reverse gearwheel 10, result in eight forward and two reverse gears. It is also usual for gearboxes to have three basic gearwheels and one reverse gearwheel. The number of gears in the gearbox 1 varies, depending on whether it is or is not provided with an additional gearbox. For example, six forward and two reverse gears are achieved with a gearbox with three basic gearwheels and one reverse gearwheel on the mainshaft. Any retarder 17, i.e. hydraulic auxiliary brake, with which the vehicle is provided will be on the output side of the mainshaft 5, i.e. after the reverse gearwheel 10. Certain vehicles also comprise a power take-off 19 for auxiliary power to operate, for example, a lifting crane or a water sprayer. Such a power take-off 19 will be on the countershaft 16. All of the gearwheels in a conventional gearbox rotate continually when the engine is running. In neutral position, all of the gearwheels on the mainshaft will freewheel, so their speed and that of the shaft will be mutually independent. Drive will then be provided by any of the basic gearwheels 6, 7, 8, 9, or the reverse gearwheel 10 on the mainshaft 5 will be locked to the mainshaft 5.

A so-called range gear 18, also called planetary gear, may be provided furthest back in the gearbox 1. This range gear 18 may be used to raise the gear ratio further by the possibility of gear positions being divided into high and low range positions. Using the range gearbox 18 provides two further gears in each gear. The gearbox in Figure 1 provides a total of eight forward gears and two reverse gears, but engaging a range gear 18 on the output portion of the mainshaft 5 doubles the number of gears, making a total of 16 forward and 4 reverse gears.

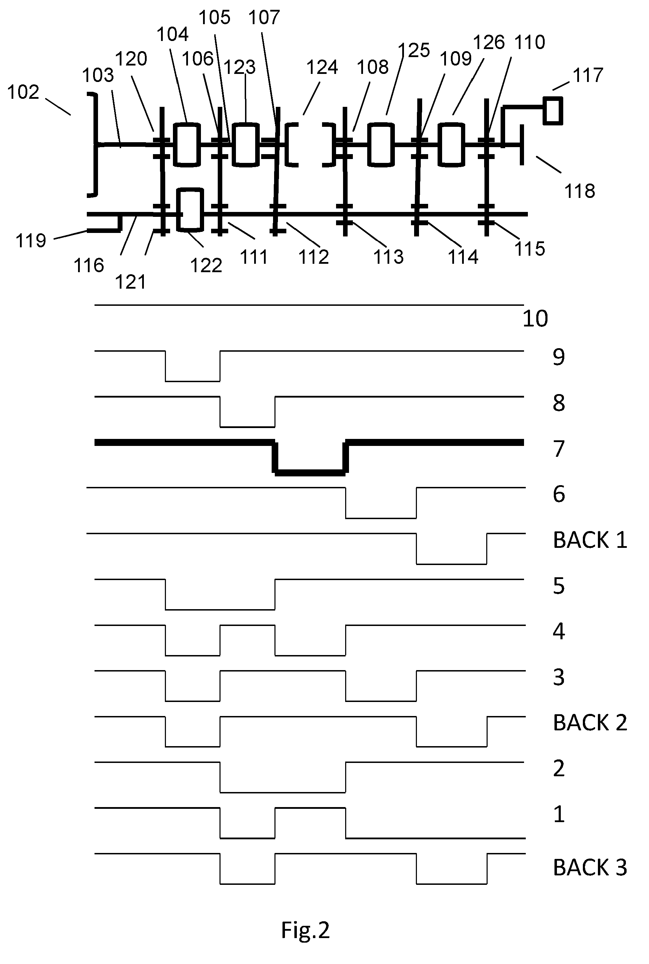

Fig. 2 depicts an embodiment of the gearbox 101 according to the present invention, in which four more split steps 123, 124, 125, 126 have been introduced on the mainshaft 5 and one split step 122 on the countershaft 116. The split steps 123, 124, 125, 126 on the mainshaft 105 are between the respective main gearwheels 106, 107, 108, 109, 110, and the split step 122 on the countershaft 116 is between the gearwheel 121 on the countershaft 116, which is in engagement with the gearwheel 120 on the input shaft 103, and the gearwheel 111 on the countershaft 116, which is in engagement with the first gearwheel 106 on the mainshaft 105, as seen from the input shaft 103, i.e. gear 4. Introducing these split steps 123, 124, 125, 126, 122 results in more gears in the gearbox 101 than in the known gearbox 1 in Figure 1. It is of course possible to introduce fewer split steps on the mainshaft 105, and split steps may of course also be introduced on the countershaft 116 to achieve a gearbox with more gears. The gearbox 101 in Figure 2 is provided with a total of six split steps 104, 123, 124, 125, 126, 122, comprising five split steps 104, 123, 124, 125, 126 on the mainshaft 105 and one split step 122 on the countershaft 116. Split steps may be provided not only between the gearwheels 120, 106 on the mainshaft but also between the gearwheels 107, 108 of the mainshaft 105 for gear 3 and gear 2, between the gearwheels 108, 109 for gear 2 and gear 1, and between the gearwheels 109, 110 for gear 1 and reverse gear. It is also possible to provide a split step between the gearwheels on the countershaft which are in engagement with the aforesaid gearwheels on the mainshaft. Fig. 2 also indicates the various gears and the power path in the gearbox for each gear. The gearbox configuration according to Figure 2 makes it possible to have a total of thirteen gears comprising ten forward and three reverse. If the gearbox is also provided with a range gearbox 118 on the output portion of the mainshaft 105, the result is two more gear steps per gear. This means that if the gearbox 101 in Figure 2 is provided with a range gear 118, the total number of gears increases to twenty-six comprising twenty forward and six reverse.

On some vehicles it is desirable to have a connection point at which an auxiliary system can be connected to the power train, a so-called power take-off 119. A power take-off 119 is usual in sundry truck applications for operating various kinds of superstructure equipment, e.g. a concrete mixer, a concrete pump or a hydraulic pump which itself powers, for example, a hydraulic motor or a hydraulic cylinder for a tilt body or, for example, a lifting crane, ladders etc. Such a power take-off 119 is with advantage connected to the input to the countershaft 116. On many heavy vehicles there is also a hydraulic auxiliary brake, a so-called retarder 117. The retarder 117 is situated furthest back on the vehicle's gearbox 101 and its main purpose is to reduce wear on the ordinary brakes. When both the mainshaft 105 and the countershaft 116 are provided with respective split steps 104, 123, 124, 125, 126 and 112, the shaft portion behind each split step may be disconnected when using the retarder 117 or power take-off 119. This means that the shaft portion not needed for running the power take-off 119 or the retarder 117 is disconnected, leading to reduced losses.

## Claims

1. A gearbox (101) for a motor vehicle comprising a housing, an input shaft (103) journalled in the housing and provided with one gearwheel (120), a mainshaft (105) journalled in the housing and provided with at least one gearwheel (106, 107, 108, 109, 110), and a countershaft (116) journalled in the housing and provided with gearwheels (121, 111, 112, 113, 114, 115), at least one of which (121) is in engagement with said gearwheel (120) on the input shaft (103), which at least one gearwheel (106, 107, 108, 109, 110) on the mainshaft (105) is in engagement with gearwheels ( 111, 112, 113, 114, 115) on said countershaft (116), which gearbox (101) further comprises a split gear step (104) between the input shaft (103) and the mainshaft (105), **characterised in that** at least one further split gear step (122, 123, 124, 145, 126) is provided on the countershaft (116).

2. A gearbox (101) according to claim 1, **characterised in that** at least one further split gear step (122, 123, 124, 125, 126) is provided somewhere on the mainshaft (105).

3. A gearbox according to any one of the foregoing claims, **characterised in that** the gearbox comprises a retarder.

4. A gearbox according to any one of the foregoing claims, **characterised in that** the gearbox comprises a power take-off.

5. A motor vehicle, **characterised in that** comprises a gearbox (101) according to any one of the foregoing claims.

6. A motor vehicle according to claim 5, **characterised in that** it is a truck.
